(19) **Europäisches Patentamt European Patent Office Office européen des brevets**

(11) **EP 3 250 751 B1**

(12) **EUROPEAN PATENT SPECIFICATION**

(45) Date of publication and mention of the grant of the patent:
**05.06.2024 Bulletin 2024/23**

(21) Application number: **16703166.5**

(22) Date of filing: **28.01.2016**

(51) International Patent Classification (IPC):
*D21H 13/08* (2006.01)   *D21H 13/16* (2006.01)
*D21H 13/24* (2006.01)   *D21H 13/26* (2006.01)
*D21H 13/40* (2006.01)   *D21H 13/50* (2006.01)
*D21H 17/57* (2006.01)   *D21H 21/56* (2006.01)
*D21H 15/02* (2006.01)

(52) Cooperative Patent Classification (CPC):
**D21H 13/08; D21H 13/16; D21H 13/24;
D21H 13/26; D21H 13/40; D21H 13/50;
D21H 15/02; D21H 17/57; D21H 21/56**

(86) International application number:
**PCT/FI2016/050049**

(87) International publication number:
**WO 2016/120528 (04.08.2016 Gazette 2016/31)**

(54) **THERMOPLASTIC FIBROUS MATERIALS AND A METHOD OF PRODUCING THE SAME**

THERMOPLASTISCHE FASERMATERIALIEN UND VERFAHREN ZUR HERSTELLUNG DAVON

MATÉRIAUX FIBREUX THERMOPLASTIQUES ET PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2015  FI 20155062**

(43) Date of publication of application:
**06.12.2017  Bulletin 2017/49**

(73) Proprietor: **Teknologian Tutkimuskeskus VTT Oy 02150 Espoo (FI)**

(72) Inventors:
 • **JUVONEN, Marja**
  **02044 VTT (FI)**
 • **HJELT, Tuomo**
  **02044 VTT (FI)**
 • **KETOJA, Jukka**
  **02044 VTT (FI)**
 • **HARLIN, Ali**
  **02044 VTT (FI)**

(74) Representative: **Boco IP Oy Ab Kansakoulukatu 3 00100 Helsinki (FI)**

(56) References cited:
EP-A1- 1 897 990       EP-A2- 0 329 200
EP-A2- 0 491 204       WO-A1-2014/080084
GB-A- 1 058 932        GB-A- 1 397 378
US-A- 4 498 956        US-A1- 2002 117 768
US-A1- 2002 172 818    US-B1- 6 238 518

## Description

### Field of the invention

The present invention relates to thermoplastic fibrous materials or products, to a method for the manufacture of thermoplastic fibrous materials and to the use of said thermoplastic fibrous materials for the manufacture of thermoplastic fibrous articles. A thermoplastic fibrous material or web, a paper web or a cardboard web, or a paper sheet or a cardboard sheet or the like may be obtained, which are suitable for deep-drawing applications.

### Background of the invention

The utilization of fibers, particularly wood fibers, in the manufacture of moldable thermoplastic webs is limited because fiber based webs are generally considered lacking moldability properties. Especially, the elongation of such fibrous materials is not sufficient. The elongation of fiber networks from wood fibers is typically very low (2-4 %). This level of elongation is too low for applications where web is turned into 3D objects by using deep-drawing methods.

Moldable fibrous products, such as moldable pulp materials, are typically used as package materials for small packages including egg cases, small machine tool packages, seedling raising pots, packages for small electronic devices etc. A molded product formed of such a moldable pulp material is manufactured by applying moldable pulp slurry produced typically from waste paper, such as newspaper, to a porous mold or a mold with a mesh screen, and then dehydrating, pressing, and drying the applied layer of moldable pulp slurry in several stages. Visual appearance of these molded products is generally modest e.g. because they are not manufactured to web form and thus they are lacking the possibility for having high quality multicolor print decorations. Additionally, the possibilities for adding a high performance barrier layer are limited. This would be extremely important e.g. in food packaging applications.

US5785817 A describes a method of manufacturing a molded pulp product, comprising the steps of mixing a moldable pulp material comprising a main constituent of pulp, a starch binder, and thermally expandable hollow particles with water which is effective to gelatinize the starch binder, filling the moldable pulp material mixed with the water in a mold assembly and compressing the moldable pulp material in the mold assembly, and heating the compressed moldable pulp material to at least a gelatinization temperature at which the starch binder is gelatinized, for thereby gelatinizing the starch binder to produce a molded pulp product of the moldable pulp material.

Several further methods and agents, such as enzymes have been proposed in the art for modifying the properties, such as moldability of fibrous products, particularly of fibrous webs. A moist web may be stretched and shaped more easily than dry webs, however, typically the strength of the products is low and surface properties inferior.

FI 20061049 describes a method for the manufacture of moldable fibrous webs, where the fibrous web is impregnated with a dispersion or solution of a chemically modified polymer, such as starch derivatives, polymeric lignin derivatives etc.

WO 2014080084 describes moldable fibrous product, comprising foam-formed fibrous material, at least one polymer impregnated in the web, and a method of producing same. A polymer is impregnated after formation of a web or sheet.

JP 2012041657 describes a reinforcing sheet, given by papermaking of compositions containing natural fibers and optional thermoplastic synthetic fibers and/or non-thermoplastic chemical fibers.

US 5308663 describes biodegradable nonwoven cellulosic fabrics molded vessels and filters. A fiber web comprising a cellulose structure is treated with a fine cellulose-chitosan composite as the inter-fiber binder or the fiber entangled with physical bonding means.

JP 2000136478 describes biodegradable nonwoven fabrics prepared by melt spinning together two types of polymers with different melting points to form sheath-core bicomponent fibers, solidifying the fibers, suctioning the fibers and opening the fibers to form webs of fibers, heat-treating the webs to give webs having fiber-to-fiber melt-bonded portions in a scattered form.

EP 1 897 990 A1 describes a web containing a thermoplastic resin and reinforcing fibers, containing high amounts of thermoplastics (examples 75 mass%).

GB 1 058 932 A discloses a process for the production of paper-like flat elements. Moldability and elongation properties are not discussed.

EP 0 491 204 A2 discloses a web of nonwoven fibers and thermoplastic matrix polymer, containing 50 to 99 % of thermoplastic matrix polymer and 0.01 to 20 % of chemically modified thermoplastic polymer.

EP 0 329 200 A2 discloses a process for making a moulded article of fiber reinforced plastics material. The materials contain high amounts of thermoplastic material (50 to 65 wt.%).

Thermoformed plastic materials are widely used for packaging purposes, particularly in modified atmosphere packaging applications. In the packaging of pharmaceutical products blister packages made of PVC and aluminum foil are utilized. However, these cannot be incinerated and they are not biodegradable. Composite products made of fibers and plastics have also been proposed, having a high plastic content.

There are substantial disadvantages associated with the moldable products according to the state of the art. More specifically, in the field related to papers or boards of fibrous materials. For example, due to low elongation, the design and geometry of produced shapes is very limited compared to corresponding plastic films thus limiting the end product segments.

The purpose of the present invention is thus to eliminate at least part of the disadvantages associated with the known technology and to provide improved fibrous materials with considerably higher elongation properties than previously achieved in the field of paper and board making utilizing fibrous webs or fiber based materials.

## Objects of the invention

An object of the invention is to provide thermoplastic fibrous materials as defined in the present claim 1.

Especially, to provide thermoplastic foam-formed fibrous materials with high elongation properties.

Another object of the invention is to provide thermoplastic fibrous products comprising thermoplastic foam-formed fibrous materials (see claim 12).

A further object of the invention is a method for the manufacture of thermoplastic fibrous materials as defined in the current claim 7.

Still a further object of the invention concerns the use of thermoplastic fibrous materials with high elongation in deep-drawing applications for the manufacture of molded fibrous articles (see claim 13).

## Definitions

Unless otherwise specified, the terms, which are used in the specification and claims, have the meanings commonly used in the field of paper, board, cardboard and tissue industry, particularly in the field of paper and pulp chemistry and industry. Specifically, the following terms have the meanings indicated below.

The term "fibrous material" refers here to fibrous web, fibrous sheet, fibrous mat or blanket comprising fibers.

The term "thermoplastic fibrous material" refers to a fibrous web, fibrous sheet, fibrous mat or blanket comprising fibers, and also comprising a thermoplastic polymer material, such as polyurethane.

The term "moldable fibrous product" refers here to fibrous materials, which can be molded to desired shape, size and form, with the aid of heat and or humidity. The term "thermoplastic fibrous product" refers here to products obtained from moldable thermoplastic fibrous materials.

The expression "foam-formed fibrous material" refers here to fibrous material, as defined above, which is obtained from a foam-formation process.

## Summary of the invention

The present invention is based on the idea that thermoplastic foam-formed fibrous materials with good elongation properties may be obtained by utilizing long fibers and adding a liquid or dispersion comprising thermoplastic polymer already in the foam-formation step. The obtained thermoplastic foam-formed fibrous material may be transformed to a moldable fibrous product having improved elongation properties. The thermoplastic fibrous materials obtained by the method of the present invention are particularly suitable for thermoformation, for providing molded products of predetermined shape and size.

## Figures

Figure 1 presents a strain at break measurement device used in the examples.

Figure 2 presents thermoformed samples according to the examples.

## Detailed description of the invention

In connection with the present invention it was surprisingly found that thermoplastic moldable fibrous materials with good elongation properties can be obtained by utilizing long fibers, low amounts of thermoplastic polymers and a new manufacturing method. The fibrous materials of the invention are fibrous webs, networks or the like and they include a thermoplastic material. These materials are especially suitable for deep-drawing applications, where molded fibrous products having predesigned shape, form and size, are manufactured. The thermoplastic fibrous materials and products may find use in applications in various fields, for example packaging.

The elongation of fiber networks from wood fibers is typically in the range of 2-4 %. The present invention brings the elongation of a fiber network to a totally new level and enables elongation values up to or above 20%. Thus, the thermoplastic fibrous materials obtained by the method of the present invention are suitable for applications where the fibrous web material is formed into 3D objects by using deep-drawing methods.

The fibrous web/network material is formed with a foam-forming method. The inventors discovered that a large average breaking strain of a fiber network is achieved, if the fiber length is increased, i.e. if long fibers are utilized in the fibrous material. This is surprising, since long fibers are known to increase the strength and are commonly used in fiber and paper webs as re-enforcement materials. It is also advantageous if the density of inter fiber bonds is reduced during the molding process. A thermoplastic polymer liquid or dispersion is used in the method and it is added already in the mixing stage, prior the web forming stage.

The inventors have studied fiber networks and webs in relation to the present invention. It has been proposed that long fibers can improve the breaking strain in fiber networks in three different ways: a) acting as re-enforcement over initial cracks that are smaller than the fiber length, b) having larger breaking strain than the shorter fibers (assuming the inter-fiber bonds are very strong), c) enabling inhomogeneous local network strain. The present method aims at the mechanism c) and not the re-enforcement typical in paper materials. Thus, it was discovered that the long fibers should preferably have circular cross-sectional shape that minimizes the direct contact area with other fibers. Moreover, a smooth fiber surface was found to be preferable, so that a small amount of thermoplastic material can cover the fiber surface evenly and improve local network sliding at elevated temperatures.

In the following section, theory related to fiber networks is presented based on observations by the inventors and using formulas from literature.

The local strain in a fiber network can differ significantly from the macroscopic strain. This kind of "non-affine" behavior is general also for bonded random fiber networks. The larger the non-affine strain fluctuations are, the easier the achievement of a large macroscopic strain becomes. The non-affine behavior is seen not only for the local elastic strain, but also for the creep strain.

The local strain variation is particularly prominent for low network density. The theoretical work in literature on bonded networks shows that the threshold density $\rho_{NA}$ for non-affine elastic behavior depends on the fiber aspect ratio $\alpha$ (defined as radius/length):

$$\rho_{NA} \sim \frac{1}{L}\alpha^{-1/2.83} \qquad\qquad (1)$$

where L is the fiber length. Thus, by reducing the aspect ratio of the fibers, the non-affine behavior appears at higher network density. This is caused mainly by the smaller bending stiffness of fibers that increases the local deformations of the network.

At extremely low densities, the dependence of the network elastic modulus E on density and fiber radius r becomes very strong:

$$E \approx (\rho - \rho_{th})^{6.7} r^{3.8} \qquad\qquad (2)$$

where $\rho_{th}$ is the critical density at which the network acquires stiffness. In other words, we can expect elastic strain to increase rapidly if the density of the network becomes very low. For typical wood fiber networks (i.e. paper-type materials), a clear non-linear behavior is seen already at density around 350 kg/m$^3$. The non-affine behavior becomes stronger, when the density is decreased further. As the elastic strain is inversely proportional to the elastic modulus, the average elastic strain (for constant average stress) is increased significantly at low network densities.

The variation of the local elastic strain leads to local stress variations. For wood fibers, the inelastic creep strain grows exponentially with stress and, thus, stress variations accelerate creep. In other words, non-affine behavior leads to significant increase not only in elastic but also in inelastic creep strain. In fact, creep strain usually exceeds the elastic strain in non-affine regions. By increasing moisture content or temperature, the plastic creep strain can be further increased in cellulose fiber networks.

To summarize, large strains become possible in bonded networks at low density and high fiber aspect ratio. These conditions may provide non-affine behavior of the network. In non-affine regions both elastic and creep strains can become large. However,

$$\rho_{NA} \sim 1/(L^{0.65} r^{0.35}) \qquad\qquad (3)$$

where L is the fiber length and r is the fiber radius. Thus, increasing just fiber length L at constant bond density (and r) decreases $\rho_{NA}$ and makes the network more affine. In other words, it is essential to decrease the (direct) bond density together with fiber length to achieve large strains.

A fiber network can be partly or fully non-bonded. The elastic modulus can be varied over several orders of magnitude by just changing the direct bond density, without modifying the fiber density. As explained earlier, such a reduction of the direct bonds is required especially with long fibers. If the bond density is not decreased, the network becomes too affine and stiff for long fibers.

As an example, let us assume that the fiber length is multiplied by the factor 10 keeping the fiber radius constant. Then to sustain non-affine behavior of the network, the direct bond density needs to be reduced by the factor $1/10^{0.65}$ = 4.45. A practical case could be replacing 2 mm long Kraft fibers by 20 mm long viscose fibers. Here, also the fiber radius is reduced roughly by a factor of two. In this case, the effective bond density needs to be taken down by the factor 3.5 in order to sustain non-affine behavior. In other words, if non-affine behavior is seen at the density 350 kg/m$^3$ for the Kraft fiber network, it would be seen at 100 kg/m$^3$ effective bond density for the 20 mm viscose fibers. In practice, this can be achieved by weakening the thermoplastic joint between fibers by heat application.

To conclude, the local non-affine strain variation is particularly prominent for low network density and for low fiber bending stiffness (i.e. for small radius/length). It is believed that if the fiber length is increased, the density of direct bonds between the fibers needs to be reduced by thermoplastic to sustain non-affine network behavior and large average breaking strain. Simultaneously, elastic modulus and bending stiffness of the network may decay as well. This decay can be compensated by adding a shorter stiff fiber component in the fiber network.

In the following section, the invention and embodiments of the invention are described in more detail.

The method for the manufacture of a thermoplastic fibrous material is defined in the present claim 1.

The steps of forming at least one foamed liquid comprising water and at least one foaming agent, forming a dispersion by dispersing fibers including long fibers in said at least one foamed liquid comprising water and at least one foaming agent, mixing the dispersion with a foamable liquid or dispersion comprising at least one thermoplastic polymer, and forming at least one foamed dispersion, may be performed as separate steps. Alternatively, two or several of the steps may be combined.

The method may comprise drying the web or sheet, i.e. optionally drying is carried out after the web or sheet has been formed. The drying of the formed web or sheet is suitably carried out by any suitable means, for example by heating with means conventionally used in the manufacture of non-woven, paper and tissue products.

The fibers used in the method of the present invention comprise long fibers. According to one embodiment of the invention, the average length of the long fibers is at least 6 mm. Suitably, the average length of the long fibers is at least 8 mm, at least 10 mm, or at least 12 mm. The average length of the long fibers may be even longer, such as at least 15 mm, at least 20 mm, or at least 24 mm.

The average width of the long fibers is typically less than 500 $\mu$m. Suitably, the average width of the long fibers is 5 - 500 $\mu$m. According to one embodiment the average width of the long fibers is 15 - 250 $\mu$m.

Suitably, the long fibers have an essentially circular, i.e. round, cross-section. In addition, the fibers are suitably smooth fibers. Smooth fibers have an even (smooth) outer surface, as a contrast to rough fibers which have an uneven outer surface. It is believed that smooth fibers with an essentially circular cross-section are beneficial, because direct contact with other fibers is reduced. Moreover, a smooth fiber surface allows a small amount of thermoplastic material to cover the fiber surface evenly and improve local network sliding during molding, which is typically performed at elevated temperatures.

In one embodiment the method comprises forming a dispersion by dispersing fibers including long fibers in the at least one foamed liquid comprising water and at least one foaming agent, wherein the amount of the long fibers is between 1 and 50 wt-% of the total amount of fibers in the dispersion. The amount of long fibers may be for example 40 wt-%, 30 wt-%, 25 wt-%, 20 wt- %, 15 wt-%, 10 wt-% or 5 wt-% of the total amount of fibers in the dispersion.

According to the present invention the amount of thermoplastic polymer in the obtained thermoplastic fibrous material is 7 wt-% or less.

The long fibers preferably comprise viscose fibers. The long fibers may comprise other fibers, such as polyester, polyethylene, polypropylene, polylactide, rayon, lyocell, nylon and any combinations thereof. Also, the long fibers may comprise glass, polyacetate, aramid, carbon and any combinations thereof.

Fibers used in the thermoplastic material of the present invention may comprise plant derived (natural fibers) or synthetic fibers, or any combinations thereof.

Natural (plant derived) fibers may be selected from chemical pulp, such as sulfate and sulfite pulp, organosolv pulp, recycled fibers, and/or mechanical pulp including e.g. refiner mechanical pulp (RMP), pressurized refiner mechanical pulp (PRMP), pretreatment refiner chemical alkaline peroxide mechanical pulp (P-RC APMP), thermomechanical pulp (TMP), thermomechanical chemical pulp (TMCP), high-temperature TMP (HT-TMP) RTS-TMP, alkaline peroxide pulp (APP), alkaline peroxide mechanical pulp (APMP), alkaline peroxide thermomechanical pulp (APTMP), Thermopulp, groundwood pulp (GW), stone groundwood pulp (SGW), pressure groundwood pulp (PGW), super pressure groundwood pulp (PGW-S), thermo groundwood pulp (TGW), thermo stone groundwood pulp (TSGW), chemimechanical pulp (CMP), chemirefinermechanical pulp (CRMP), chemithermomechanical pulp (CTMP), high-temperature CTMP (HT-CTMP), sulfite-modified thermomechanical pulp (SMTMP), reject CTMP (CTMPR), groundwood CTMP (G-CTMP), semichemical pulp (SC), neutral sulfite semi chemical pulp (NSSC), high-yield sulfite pulp (HYS), biomechanical pulp (BRMP), pulps produced according to the OPCO process, explosion pulping process, Bi-Vis process, dilution water sulfonation process (DWS), sulfonated long fibers process (SLF), chemically treated long fibers process (CTLF), long fiber CMP process (LFCMP), Kraft wood pulp, mdf-fibers, nanocellulose, cellulose fibers having average particle size less than 1000 nm, and modifications and combinations thereof. The pulp may be a bleached or non-bleached pulp. The pulp may originate from hardwood or softwood, including birch, beech, aspen such as European aspen, alder, eucalyptus, maple, acacia, mixed tropical hardwood, pine such as loblolly pine, fir, hemlock, larch, spruce such as Black spruce or Norway spruce, recycled pulp, waste streams and side streams comprising fibers and originating from food and pulp and paper industry, and any mixtures thereof.

Also non-wood plant raw material, such as seed hair fibers, leaf fibers, bast fibers, plant fibers can be provided from e.g. straws of grain crops, wheat straw, reed canary grass, reeds, flax, hemp, kenaf, jute, ramie, seed, sisal, abaca, coir, bamboo, bagasse, cotton kapok, milkweed, pineapple, cotton, rice, reed, esparto grass, Phalaris arundinacea, or combinations thereof may be used.

The synthetic fibers may comprise fibers of viscose, polyester, polyethylene, polypropylene, polylactide, rayon, lyocell, nylon, glass, polyacetate, aramid, carbon and any combinations thereof.

Additionally, optional additives may be used. Said additives may comprise wetting agents, wet-strengtheners, coloring agents, fire protection agents (e.g. borates, phosphates, magnesium trihydrate), softening agents, inorganic fillers and any combinations thereof.

The foraminous support is for example a wire. As a foraminous support all solutions commonly used by process industry e.g. paper making can be used.

The draining is suitably carried out with the aid of vacuum, or by gravitational filtration. Vacuum pumps may be used to provide vacuum.

According to one embodiment of the method, the amount of foaming agent in the foamed liquid comprising water and at least one foaming agent is in the range of 0.005 - 5% by weight, preferably 0.01 - 2% by weight, particularly preferably 0.01 - 1% by weight of at least one foaming agent.

According to one embodiment of the method, the foamed dispersion (or dispersions) is formed of 0.1 - 20% by weight, preferably 0.5 - 15 % by weight, particularly preferably 1 - 10% by weight of fibers comprising long fibers, and optionally additional fibers selected from synthetic fibers, natural fibers, and combinations thereof.

Optionally at least one additional foamed dispersion is formed of fibers selected from natural fibers and synthetic fibers, by dispersing the fibers in a foamable liquid comprising water and at least one foaming agent. Optionally said foamed dispersions are conveyed to the foraminous support as individual layers, followed by draining. If the additional foamed dispersion(s) is conveyed individually on the support, a product comprising at least two individual fiber layers is obtained.

The foamed dispersion formed in the method of the present invention typically comprises from 55 to 75 % by volume, or from 60 to 70 % by volume of air. Air refers here to all gases having more than 50 % by volume of nitrogen content, which includes atmospheric air or gases derived from atmospheric *air.*

The foamable liquid or dispersion comprising at least one thermoplastic polymer, which according to the method of the invention is mixed with the dispersion comprising fibers and at least one foamed liquid comprising water and at least one foaming agent, refers to an aqueous dispersion comprising thermoplastic polymer particles dispersed therein, or to a suspension comprising thermoplastic polymer particles suspended therein. Said dispersion or suspension may comprise 20 - 50 wt-%, or for example 30 - 40 wt-% of the thermoplastic polymer. The liquid may also be or comprise a melted liquid polymer.

In one aspect, the foamable liquid or dispersion comprising at least one thermoplastic polymer is not a powder, granulate or other coarse-grained material or mixture.

It is preferred to use a dispersion or suspension comprising thermoplastic polymer, because the particle size in dispersions or suspensions is rather small. This may provide film forming properties to the liquid or dispersion comprising at least one thermoplastic polymer. Film forming properties to the liquid or dispersion containing the thermoplastic polymer are beneficial for the thermoforming and elongation properties of the fibrous material. The result is that products with higher elongation properties at elevated temperatures are obtained, having improved moldability properties during for example deep-drawing applications.

The foaming agent may act as a surface active agent, enabling the foam-formation and additionally it may act as a binder in the formed structure.

The foaming agent is selected from anionic, cationic, non-ionic and amphoteric surface active agents and surfactants, proteins, and any combination thereof, including polyvinyl alcohol and foamable starches. Suitably said foaming agent is selected from anionic and non-ionic surface active agents, polyvinyl alcohols and foamable starches.

Optionally traditional additives, such as binders may be used.

In the foam-laid method any equipment and apparatus used in foam-formation processes in the tissue paper and non-woven manufacture can be utilized here, such as suggested for example in GB 1397378, EP 481746 and US 3716449. Products comprising one or more foam-deposited layers may be obtained.

Foam-formation technique helps to reduce the amount of needed water and energy in the process compared to e.g. wet-laid processes, and makes it possible to use a completely closed process.

The thermoplastic fibrous materials according to the present invention are thermoplastic foam-formed fibrous materials. Said fibrous material may be selected from fibrous webs, mats, blankets, paper webs, board webs, tissue webs, or sheets cut from any of said webs. Said fibrous material may be formed from synthetic fibers and/or plant derived (natural fibers), or any combinations thereof.

The thermoplastic foam-formed fibrous material according to the invention is obtainable or obtained by the method according to the invention. The amount of the at least one thermoplastic polymer in the thermoplastic foam-formed fibrous material is 10 wt-% or less of the total weight of the material. The amount may be for example 9 wt-% or less, or 8 wt-% or less. According to one embodiment the amount of the at least one thermoplastic polymer is 7 wt-% or less.

The method according to the invention provides good elongation properties, even though the obtained thermoplastic fibrous material contains less thermoplastic polymer than in prior art solutions. The reason is believed to be that the method allows the thermoplastic polymer to reach optimal locations by being distributed evenly and close to the fibers throughout the thermoplastic fibrous material. The reduced amount of thermoplastic polymer is advantageous, because the raw-materials are expensive and, thus, manufacturing costs can be reduced.

The thermoplastic foam-formed fibrous material may comprise a fibrous material selected from the group consisting of fibrous webs, paper webs, board webs, and sheets cut from any of said webs.

The thermoplastic foam-formed fibrous material comprises an amount of fibers being at least 80 wt-%, preferably at least 85 wt-%, more preferably at least 90 wt-%. The percentages are based on the total weight of said thermoplastic foam-formed fibrous material.

The grammage of the thermoplastic foam-formed fibrous material is typically rather low, but still good elongation properties can be achieved. According to one embodiment the grammage of the thermoplastic foam-formed fibrous material is 400 $g/m^2$ or less, such as between 10 and 400 $g/m^2$. Preferably the grammage is between 50 and 400 $g/m^2$. The grammage may also be for example 350 $g/m^2$ or less, 300 $g/m^2$ or less, 250 $g/m^2$ or less, 200 $g/m^2$, 150 $g/m^2$ or less, or 100 $g/m^2$ or less. The thermoplastic polymer is selected from carbohydrate derivatives, polylactic acid, polyurethane and polyolefins. Examples of suitable carbohydrate derivatives are cellulose derivatives, starch and dextrin derivatives and mixtures of two or more derivatives. Examples of such derivatives are: cellulose $C_{1-4}$ alkyl ester, oxidized cellulose $C_{1-4}$ alkyl ester, starch $C_{1-4}$ alkyl ester, oxidized starch $C_{1-4}$ lower alkyl ester, and corresponding ethers and mixtures of esters and/or ethers. Suitable derivatives are cellulose and starch esters and ethers, especially lower alkyl esters, such as methyl, ethyl, propyl and butyl esters (cellulose or starch formiate, -acetate, -propionate and -butyrate).

The thermoplastic foam-formed fibrous materials according to the invention may be used to manufacture thermoplastic fibrous products. Thus, the invention also relates to thermoplastic fibrous products comprising the thermoplastic foam-formed fibrous material obtained or obtainable by the method according to the invention.

The thermoplastic fibrous materials according to the invention may be used in deep-drawing applications for the manufacture of molded fibrous products or articles.

According to the present invention, long fibers are used for improving the elongation of thermoplastic foam-formed fibrous materials.

The thermoplastic foam-formed fibrous material typically comprises from 0.001 to 0.1% by weight of at least one foaming agent.

The thermoplastic fibrous product may be a multi-layer product comprising more than one layer. The multi-layer product may comprise at least one barrier layer between two fiber layers.

Considerable advantages can be achieved with the present invention compared to known methods and materials in the field of paper or board making, including that

- high elongation is achieved with exceptionally high fiber content and exceptionally low content of thermoplastic polymer
- this invention enables the production of exceptionally deep 3D shapes which were earlier impossible to produce of low basis weight fiber web or sheets.

Possible application areas are all industries which are currently using plastics as a raw material for goods, which are converted to the final product with the deep-drawing method.

The thermoplastic fibrous materials and products obtainable by the method of the present invention may comprise one layer of fibrous material (single-layer product) or more than one layer of fibrous material, and one or more layers comprising thermoplastic compounds. The layers may be combined by lamination, with adhesives, barrier layers and the like whereby a multi-layered structure is obtained. The method may optionally further comprise coating step, whereby coating methods known in the art may be carried out using coating dispersions.

The thermoplastic fibrous materials and products may be subjected steps selected from cutting, undulating, thermoforming or molding in a molding device, with the aid of heat and optionally moisture, to obtain products with predetermined form and size.

Thus, by the method of the present invention, a foam-formed thermoplastic fibrous material may be obtained and it can be used to manufacture moldable fibrous products which can be processed to various molded products. Said molded products may be used as packages for fragile and delicate products, for food packages, consumer packages, for blister packages of pharmaceuticals and other products requiring such packages.

The present invention provides a thermoplastic single-layer or multilayer thermoplastic fibrous product, with considerably higher elongation properties than previously has been achieved in the field of fiber webs.

The thermoplastic fibrous materials and products can easily be molded, typically using heat, to a desired form or structure. The molding of the thermoplastic fibrous material or product is suitably carried out at elevated temperatures, without moisture, where by heat activates the polymer incorporated in the product and enables easy molding. Alternatively, molding may also be carried out in the presence or moisture at elevated temperatures.

In the following chapter the present invention is illustrated by examples.

**Examples**

**Example 1 Strain at break**

Sheet preparation

Sheets of thermoplastic fibrous material were prepared by a foam-forming method and dried in room temperature under restrained conditions against a plate. Viscose fibers of various lengths and unground bleached pine pulp were used as a fiber raw material. A polyurethane (PU) dispersion was used as a thermoplastic additive. A dispersion containing the fibers was mixed with a thermoplastic polymer dispersion. Thus, all raw materials were mixed together prior pouring the suspension on a wire and removing the water with the help of vacuum. The basis weight of the dried sheets varied between 240 and 350 g/m$^2$.

Performance characterization

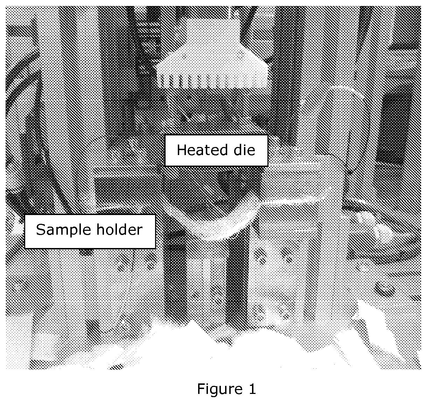

Strains at break values of the prepared sheets were measured. The measurements were carried out with a device where a heated die with a curved surface presses the attached sample slip and the elongations at break values are registered. Measurements were performed in 120 °C. The device is presented in Figure 1.

Results

Strain at break values are presented in Table 1. When 50% of the effectively bonded pine fibers were replaced with viscose fibers the elongation values were increased by 50%. The positive effect of PU addition on the strain at break values was detected by comparing especially the values of samples 1 vs. 2 and 4 vs 6.

Table 1. Strain at break values in machine (MD) and cross directions (CD). Basis weight level of the samples was 350 g/m$^2$. The amount of PU was 3-7 weight %.

| Sample ID | Fiber Amount weight %, Fiber grade | Thermoplastic additive | Strain at break | |
|---|---|---|---|---|
| | | | MD, % | CD, % |
| 1 | 100% Pine | - | 5.9 | 6.3 |
| 2 | 100% Pine | PU | 10.6 | 12.6 |
| 3 | 50% Pine + 50% 6 mm Viscose | PU | 19.4 | 19.9 |
| 4 | 50% Pine + 50% 12 mm Viscose | PU | 20.2 | 18.8 |
| 5 | 50% Pine+ 50% 6 mm Viscose | - | 19.0 | 19.7 |
| 6 | 50% Pine + 50% 12 mm Viscose | - | 16.1 | 17.1 |

(continued)

| Sample ID | Fiber Amount weight %, Fiber grade | Thermoplastic additive | Strain at break | |
|---|---|---|---|---|
| | | | MD, % | CD, % |
| 7 | 100% 6 mm Viscose | PU | 19.1 | 18.7 |
| 8 | 100% 12 mm Viscose | PU | 19.8 | 20.7 |

**Example 2 Thermoforming**

Sheet preparation

Sheets of thermoplastic fibrous material were prepared as explained in example 1. Used raw materials were viscose and PU.

Performance characterization

The influence of fiber length on the elongation properties of the prepared material was evaluated by laboratory scale thermoforming. Sample was attached to a mold which was placed between press plates. Temperature during forming was 100 °C and the mold depth 3 cm.

Results

Thermoforming results are presented in Figure. The increase of the viscose fiber length clearly improved the result.

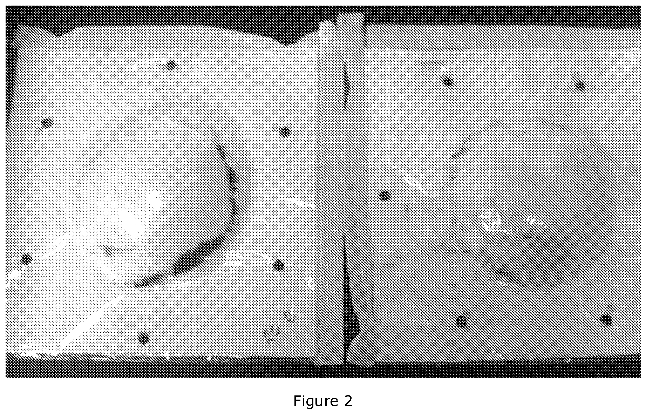

Figure 2 shows the thermoformed samples, which were prepared of viscose and PU: 6 mm viscose + PU (on the left) and 12 mm viscose + PU (on the right). Basis weight of the samples were about 240 g/m$^2$ and PU amount about 7 weight % of the formed thermoplastic fibrous material.

**Claims**

1. A method for the manufacture of a thermoplastic fibrous material, **characterized in that** the method comprises the steps of

   - forming at least one foamed liquid comprising water and at least one foaming agent,
   - forming a dispersion by dispersing fibers including long fibers, wherein the average length of the long fibers is at least 6 mm, in said at least one foamed liquid comprising water and at least one foaming agent, wherein the amount of the long fibers is between 1 and 50 wt-% of the total amount of fibers in the dispersion,
   - mixing the dispersion with a dispersion comprising at least one thermoplastic polymer, selected from carbohydrate derivatives, polylactic acid, polyurethane and polyolefins,
   - forming at least one foamed dispersion, and
   - conveying the foamed dispersion or dispersions to a foraminous support and draining liquid through the foraminous support to form a web or a sheet, to obtain the thermoplastic fibrous material

   wherein the web or sheet is dried and the amount of thermoplastic polymer in the obtained thermoplastic fibrous material is 7 wt-% or less and the amount of the fibers is at least 80 wt-% of the total weight of the material.

2. The method according to claim 1, **characterized in that** the method comprises drying said web or sheet to obtain a thermoplastic fibrous material.

3. The method according to claim 1 or 2, **characterized in that** the average length of the long fibers is at least 10 mm, preferably at least 12 mm.

4. The method according to any one of the preceding claims **characterized in that** the average width of the long fibers is less than 500 $\mu$m, preferably 5 - 500 $\mu$m, more preferably 15 - 250 $\mu$m.

**5.** The method according to any one of the preceding claims, **characterized in that** the long fibers have an essentially circular cross-section.

**6.** The method according to any one of the preceding claims, **characterized in that** the long fibers comprises long fibers of materials selected from the group consisting of viscose, polyester, polyethylene, polypropylene, polylactide, rayon, lyocell, nylon, glass, polyacetate, aramide, carbon and any combinations thereof.

**7.** A thermoplastic foam-formed fibrous material obtainable by the method according to any one of the claims 1 to 6 **characterized in that** the thermoplastic foam-formed fibrous material comprises at least one thermoplastic polymer selected from carbohydrate derivatives, polylactic acid, polyurethane and polyolefins, and the amount of the at least one thermoplastic polymer is 7 wt-% or less of the total weight of the material and the amount of the fibers is at least 80 wt-%, of the total weight of the material.

**8.** The thermoplastic foam-formed fibrous material according to claim 7, **characterized in that** it comprises a fibrous material selected from the group consisting of fibrous webs, paper webs, board webs, and sheets cut from any of said webs.

**9.** The thermoplastic foam-formed fibrous material according to any one of the claims 7 to 8, **characterized in that** the amount of the fibers is at least 85 wt-%, preferably at least 90 wt-% of the total weight of the material.

**10.** The thermoplastic foam-formed fibrous material according to any one of the claims 7 to 9, **characterized in that** the grammage of said fibrous material is 400 g/m$^2$ or less, preferably between 10 and 400 g/m$^2$, more preferably between 50 and 400 g/m$^2$.

**11.** The thermoplastic foam-formed fibrous material according to any one of claims 7 to 10, **characterized in that** the thermoplastic polymer is polyurethane.

**12.** A thermoplastic fibrous product comprising the thermoplastic foam-formed fibrous material according to any one of claims 7 - 11.

**13.** Use of the thermoplastic fibrous material according to any one of the claims 7 to 11 in deep-drawing applications for the manufacture of molded fibrous products or articles.

**Patentansprüche**

**1.** Verfahren zur Herstellung eines thermoplastischen faserigen Materials, **gekennzeichnet dadurch, dass** das Verfahren die Schritte umfasst:

- Ausbilden mindestens einer geschäumten Flüssigkeit, die Wasser und mindestens einen Schaumbildner umfasst,
- Ausbilden einer Dispersion durch Dispergieren von Fasern, die Langfasern umfassen, wobei die mittlere Länge der Langfasern in der mindestens einen geschäumten Flüssigkeit, die Wasser und mindestens einen Schaumbildner umfasst, mindestens 6 mm beträgt, wobei die Menge der Langfasern zwischen 1 und 50 Gew.% der Gesamtfasermenge in der Dispersion liegt,
- Mischen der Dispersion mit einer Dispersion, die mindestens ein thermoplastisches Polymer umfasst, welches aus Kohlenhydratderivaten, Polymilchsäure, Polyurethan und Polyolefinen ausgewählt ist,
- Ausbilden mindestens einer geschäumten Dispersion, und
- Fördern der geschäumten Dispersion oder Dispersionen zu einer porösen Unterlage und Abführen von Flüssigkeit durch die poröse Unterlage zur Bildung einer Bahn oder eines Blattes, um das thermoplastische faserige Material zu erzeugen,

wobei die Bahn oder das Blatt getrocknet wird und die Menge des thermoplastischen Polymers im erzeugten thermoplastischen faserigen Material 7 Gew.% oder weniger beträgt und die Menge der Fasern mindestens 80 Gew.% des Gesamtgewichts des Materials beträgt.

**2.** Verfahren nach Anspruch 1, **gekennzeichnet dadurch, dass** das Verfahren umfasst: Trocknen der Bahn oder des Blattes, um ein thermoplastisches faseriges Material zu erzeugen.

3. Verfahren nach Anspruch 1 oder 2, **gekennzeichnet dadurch, dass** die mittlere Länge der Langfasern mindestens 10 mm, bevorzugt mindestens 12 mm beträgt.

4. Verfahren nach einem der vorhergehenden Ansprüche, **gekennzeichnet dadurch, dass** die mittlere Breite der Langfasern kleiner als 500 $\mu$m, bevorzugt 5 bis 500 $\mu$m, bevorzugter 15 bis 250 $\mu$m beträgt.

5. Verfahren nach einem der vorhergehenden Ansprüche, **gekennzeichnet dadurch, dass** die Langfasern einen im Wesentlichen kreisrunden Querschnitt aufweisen.

6. Verfahren nach einem der vorhergehenden Ansprüche, **gekennzeichnet dadurch, dass** die Langfasern lange Fasern von Materialien umfassen, die ausgewählt sind aus der Gruppe bestehend aus Viskose, Polyester, Polyethylen, Polypropylen, Polylactid, Kunstseide (Rayon), Lyocell, Nylon, Glas, Polyacetat, Aramid, Kohlenstoff und beliebigen Kombinationen derselben.

7. Thermoplastisches schaumgebildetes faseriges Material, das durch das Verfahren nach einem der Ansprüche 1 bis 6 erhältlich ist, **gekennzeichnet dadurch, dass** das thermoplastische schaumgebildete faserige Material mindestens ein thermoplastisches Polymer umfasst, das aus Kohlenhydratderivaten, Polymilchsäure, Polyurethan und Polyolefinen ausgewählt ist, und die Menge des mindestens einen thermoplastischen Polymers 7 Gew.% oder weniger des Gesamtgewichts des Materials beträgt und die Menge der Fasern mindestens 80 Gew.% des Gesamtgewichts des Materials beträgt.

8. Thermoplastisches schaumgebildetes faseriges Material nach Anspruch 7, **gekennzeichnet dadurch, dass** es ein faseriges Material umfasst, das ausgewählt ist aus der Gruppe bestehend aus Faserbahnen, Papierbahnen, Pappbahnen und Blättern, die aus solchen Bahnen geschnitten werden.

9. Thermoplastisches schaumgebildetes faseriges Material nach einem der Ansprüche 7 bis 8, **gekennzeichnet dadurch, dass** die Menge der Fasern mindestens 85 Gew.%, bevorzugt mindestens 90 Gew.% des Gesamtgewichts des Materials beträgt.

10. Thermoplastisches schaumgebildetes faseriges Material nach einem der Ansprüche 7 bis 9, **gekennzeichnet dadurch, dass** die Grammatur des faserigen Material 400 g/m$^2$ oder weniger, bevorzugt zwischen 10 und 400 g/m$^2$, bevorzugter zwischen 50 und 400 g/m$^2$, beträgt.

11. Thermoplastisches schaumgebildetes faseriges Material nach einem der Ansprüche 7 bis 10, **gekennzeichnet dadurch, dass** das thermoplastische Polymer Polyurethan ist.

12. Thermoplastisches faseriges Produkt, das das thermoplastische schaumgebildete faserige Material nach einem der Ansprüche 7 bis 11 umfasst.

13. Verwendung des thermoplastischen faserigen Materials nach einem der Ansprüche 7 bis 11 in Tiefziehanwendungen zur Herstellung von Fasergussprodukten oder Fasergussartikeln.

**Revendications**

1. Procédé de fabrication d'un matériau fibreux thermoplastique, **caractérisé en ce que** le procédé comprend les étapes consistant à

- former au moins un liquide moussé comprenant de l'eau et au moins un agent moussant,
- former une dispersion en dispersant des fibres comportant des fibres longues, la longueur moyenne desdites fibres longues étant d'au moins 6 mm dans ledit au moins un liquide moussé comprenant de l'eau et au moins un agent moussant, la quantité des fibres longues étant comprise entre 1 et 50 % en poids de la quantité totale de fibres dans la dispersion,
- mélanger la dispersion avec une dispersion comprenant au moins un polymère thermoplastique choisi parmi les dérivés d'hydrates de carbone, l'acide polylactique, le polyuréthane et les polyoléfines,
- former au moins une dispersion moussée, et
- acheminer la dispersion ou les dispersions moussée(s) vers un support poreux et évacuer du liquide à travers le support poreux pour former une bande ou feuille afin d'obtenir la matériau fibreux thermoplastique,

dans lequel la bande ou feuille est séchée, et la quantité du polymère thermoplastique dans le matériau fibreux thermoplastique obtenu est de 7 % en poids ou moins et la quantité des fibres est d'au moins 80 % en poids du poids total du matériau.

2. Procédé selon la revendication 1, **caractérisé en ce que** le procédé comprend l'étape consistant à sécher la bande ou feuille pour obtenir un matériau fibreux thermoplastique.

3. Procédé selon la revendication 1 ou 2, **caractérisé en ce que** la longueur moyenne des fibres longues est d'au moins 10 mm, préférablement d'au moins 12 mm.

4. Procédé selon l'une des revendications précédentes, **caractérisé en ce que** la largeur moyenne des fibres longues est inférieure à 500 $\mu$m, préférablement de 5 à 500 $\mu$m, plus préférablement de 15 à 250 $\mu$m.

5. Procédé selon l'une des revendications précédentes, **caractérisé en ce que** les fibres longues présentent une section transversale essentiellement circulaire.

6. Procédé selon l'une des revendications précédentes, **caractérisé en ce que** les fibres longues comprennent des fibres longues de matières choisies dans le groupe constitué par la viscose, le polyester, le polyéthylène, le polypropylène, le polylactide, la rayonne, le lyocell, le nylon, le verre, le polyacétate, l'aramide, le carbone et les combinaisons quelconques de ceux-ci.

7. Matériau fibreux thermoplastique formé en mousse obtenable par le procédé selon l'une des revendications 1 à 6, **caractérisé en ce que** le matériau fibreux thermoplastique formé en mousse comprend au moins un polymère thermoplastique choisi parmi les dérivés d'hydrates de carbone, l'acide polylactique, le polyuréthane et les polyoléfines, et la quantité dudit au moins un polymère thermoplastique est de 7 % en poids ou moins du poids total du matériau et la quantité des fibres est d'au moins 80 % en poids du poids total du matériau.

8. Matériau fibreux thermoplastique formé en mousse selon la revendication 7, **caractérisé en ce qu'**il comprend un matériau fibreux choisi parmi le groupe constitué par les bandes de fibres, les bandes de papier, les bandes de carton et les feuilles découpées sur l'une desdites bandes.

9. Matériau fibreux thermoplastique formé en mousse selon l'une des revendications 7 à 8, **caractérisé en ce que** la quantité des fibres est d'au moins 85 % en poids, préférablement d'au moins 90 % en poids, du poids total du matériau.

10. Matériau fibreux thermoplastique formé en mousse selon l'une des revendications 7 à 9, **caractérisé en ce que** le grammage dudit matériau fibreux est de 400 g/m$^2$ ou moins, préférablement compris entre 10 et 400 g/m$^2$, plus préférablement entre 50 et 400 g/m$^2$.

11. Matériau fibreux thermoplastique formé en mousse selon l'une des revendications 7 à 10, **caractérisé en ce que** le polymère thermoplastique est le polyuréthane.

12. Produit fibreux thermoplastique comprenant le matériau fibreux thermoplastique formé en mousse selon l'une des revendications 7 à 11.

13. Utilisation du matériau fibreux thermoplastique selon l'une des revendications 7 à 11 dans des applications de formage profond pour fabriquer des produits ou articles fibreux moulés.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5785817 A
- FI 20061049
- WO 2014080084 A
- JP 2012041657 B
- US 5308663 A
- JP 2000136478 B
- EP 1897990 A1
- GB 1058932 A
- EP 0491204 A2
- EP 0329200 A2
- GB 1397378 A
- EP 481746 A
- US 3716449 A